# EUROPÄISCHE PATENTANMELDUNG

(11) **EP 4 318 085 A2**
(43) Veröffentlichungstag der Anmeldung: **07.02.2024**
(21) Anmeldenummer: 23000090.3
(22) Anmeldetag: 15.06.2023
(51) Int. Cl.: G02C 1/08

(54) **BRILLENFASSUNG**

(30) Priorität: 17.06.2022 EP 22000165
(71) Anmelder: Gregori, Uli, 63654 Büdingen (DE)
(72) Erfinder: GREGORI, Uli, 63654 Büdingen (DE)
(74) Vertreter: Borbach, Markus

(57) **Zusammenfassung**

Die vorliegende Erfindung betrifft eine Brillenfassung. In der Regel trägt eine solche Brillenfassung zwei Gläser und weist zwei Brillenbügel auf. Die Fassung ist für viele Brillen geeignet, auch für Sonnenbrillen und Lesebrillen. Insbesondere geht es um eine Brillenfassung (10) für mindestens ein Brillenglas, welche das Brillenglas mit einem umlaufenden Rahmen (12, 14) umschließen kann, wobei der umlaufende Rahmen (12, 14) zum Einsetzen des Glases geöffnet werden kann, wobei der umlaufende Rahmen einen Verschluss aufweist, der aus einem ersten Verschlusselement (30) und einem zweiten Verschlusselement (32) gebildet wird, wobei das erste Verschlusselement und das zweite Verschlusselement von einer Offenstellung in eine Schließstellung überführt werden können und in der Schließstellung so zusammenwirken, dass eine Zugkraft im umlaufenden Rahmen (10, 14) wirkt. Darüber hinaus betriff die Erfindung ein Verfahren zum Einsetzen eines Brillenglases.

## Beschreibung

### Gebiet der Erfindung

Die vorliegende Erfindung betrifft eine Brillenfassung. In der Regel trägt eine solche Brillenfassung zwei Gläser und weist zwei Brillenbügel auf. Die Fassung ist sowohl für Korrektions- als auch für Sonnenbrillen geeignet.

### Hintergrund der Erfindung

Das Gebrauchsmuster DE 7717685 U1 offenbart eine Brillenfassung, die den leichten Austausch der Brillengläser ermöglicht. Dazu ist über dem Nasensteg ein beweglicher Bügel angeordnet, der zwischen einer Offenposition und einer Schließposition bewegt werden kann. In der Offenposition lassen sich die Brillengläser leicht entnehmen. Diese Konstruktion lässt allerdings wenig Freiheit bei der Rahmengestaltung.

Die koreanische Anmeldung KR 200191856 Y1 und das europäische Patent EP 611 978 B1 offenbaren eine rahmenlose Brille. Bei dieser Konstruktion müssen die Brillengläser nicht passgenau in den Rahmen eingefügt werden. Allerdings wird auf den Schutz der Gläser durch einen Rahmen verzichtet.

Das japanische Gebrauchsmuster JP 3015376 U offenbart ein Verschlusselement für einen Brillenrahmen. Zwei gegenüberliegende Rahmenenden sind jeweils mit Verbreiterungen ausgerüstet. Diese stehen nach außen (vom Glas abgewandt) über. Die beiden Verschlusselemente weisen Löcher auf und können durch einen Bolzen verbunden werden. Diese Art der Verbindung von Enden eines Brillenrahmens ist optisch nachteilig. Im Übrigen sind auch Verletzungen an den Verschlusselementen möglich. Außerdem ist die Verbindung der Verschlusselemente schwierig, da ein Bolzen passgenau eingesetzt werden muss.

Die vorliegende Erfindung möchte eine neuartige Brillenfassung anbieten, welche sich zum Einsetzen oder Entnehmen der Gläser leicht öffnen und schließen lässt. Die Nachteile des Standes der Technik sollen umgangen werden. Trotz dieser verbesserten mechanischen Möglichkeiten soll eine schlanke elegante Fassung angeboten werden, welche viele Designmöglichkeiten zulässt. Die Erfindung umfasst auch ein Verfahren zum Einsetzen von Brillengläsern.

Dieser Aufgabe wird durch eine Brillenfassung nach Anspruch 1 gelöst. Die entsprechenden Vorteile weist auch ein Verfahren nach Anspruch 12 und den zugeordneten Unteransprüchen auf.

### Nähere Beschreibung

Die vorliegende Erfindung betrifft eine Brillenfassung für mindestens ein Brillenglas. Mit einer solchen Brillenfassung kann das mindestens eine Brillenglas zur Nutzung vor einem Auge platziert werden. In der Regel wird die Brillenfassung zwei Brillengläser halten. Es kommt in Betracht, dass eine Klemmfassung oder Monokelfassung gewählt wird, in der Regel aber wird die Brillenfassung zwei Bügel haben, die die Brille in bekannter Weise an den Ohren eines Trägers abstützen und halten.

Die Brillenfassung ist für vielfältige Brillengläser geeignet, insbesondere auch für getönte oder ungetönte Gläser. Das Wort Brillenglas soll hier auch solche optischen Elemente beschreiben, welche nicht aus Glas sind, sondern beispielsweise aus Kunststoff hergestellt werden.

Das Brillenglas erstreckt sich im Wesentlichen entlang einer Ebene. Allerdings sind die Außenflächen in der Regel über dieser Ebene gewölbt. Dennoch kann das Brillenglas entlang der hauptsächlichen Erstreckungsebene in einen Quader eingefasst werden, dessen größte Flächen parallel zur hauptsächlichen Erstreckungsebene sind. Die Seitenflächen eines solchen Quaders sind typischerweise um einen Faktor von mindestens 5, meist auch um einen Faktor von mehr als 10 oder 20 kürzer als die längste Seitenfläche des Quaders in der Erstreckungsebene. Die Höhe der Seitenflächen beschreibt in der Regel die Dicke des Brillenglases gut.

Die Brillenfassung weist mindestens einen umlaufenden Rahmen auf, der das mindestens eine Brillenglas umschließen kann. In der Regel sind zwei umlaufende Rahmen vorgesehen. Die umlaufenden Rahmen werden in der Regel durch einen Nasensteg verbunden. Gegenüberliegend zum Nasensteg ist in der Regel jeweils ein Anschluss für einen Brillenbügel vorgesehen.

Der umlaufende Rahmen umschließt ein Brillenglas entlang dessen äußerer, in der Regel geschliffener Kantenflächen. Der Rahmen kann dabei den Rand des Glases vollständig umschließen, das heißt durchgehend berühren. Es kommt auch in Betracht, dass der Rahmen den Rand des Brillenglases nur intermittierend berührt. Es kann genügen, dass der umlaufende Rahmen ein Brillenglas nur in einem Winkelbereich von etwas über 180° umschließt.

Die Brillenfassung und genauer der umlaufende Rahmen soll zum Einsetzen eines Glases geöffnet werden können. Dazu soll der umlaufende Rahmen einen Verschluss aufweisen, der ein erstes Verschlusselement und ein zweites Verschlusselement umfasst.

Beide Verschlusselemente sind vorzugsweise mechanische Elemente. Die Elemente sollen von einer Offenstellung in eine Schließstellung überführt werden können. In der Offenstellung haben die Elemente in der Regel einen bestimmten Abstand, sodass der umlaufende Rahmen einen größeren Umfang umschließen kann und dementsprechend das Einsetzen von Brillengläsern kraftlos möglich ist. In der Offenstellung bildet der Rahmen also ein erstes Ende und ein zweites Ende aus.

In der Schließstellung sollen die Verschlusselemente so zusammenwirken, dass der umlaufende Rahmen ein Brillenglas halten kann. Dazu soll in der Schließstellung eine Zugkraft aufgebracht werden, welche dann das erste Ende und das zweite Ende verbindet und im umlaufenden Rahmen wirkt. In dieser Weise kann durch eine Kraftwirkung auf den Rand des Brillenglases dieses in der Brillenfassung gehalten werden. Dieses Konzept zur Halterung eines Brillenglases im Rahmen ist bekannt.

Die Verschlusselemente sollen jedoch diese Zugkraft durch ihre bloße Zusammenwirkung aufbringen können, es ist also kein zusätzliches Element, beispielsweise eine zusätzliche Schraube erforderlich, um diese Zugkraft aufzubringen. Die Verschlusselemente sind somit selbstsichernd.

Es ist insbesondere zweckmäßig, beide Verschlusselemente als mechanische Elemente zu gestalten und dabei das erste Verschlusselement als männliches Element und das zweite Verschlusselement als weibliches Element zu gestalten. Diese beiden Elemente können miteinander in einer Schließstellung verbunden werden. Das männliche Element greift dabei typischerweise in eine Ausbuchtung oder Vertiefung oder Öffnung des weiblichen Elements ein. Insbesondere hat es sich als zweckmäßig erwiesen, das erste Verschlusselement als Haken auszuführen und das zweite Verschlusselement als Öse auszuführen.

Es ist ebenfalls zweckmäßig, wenn das erste und das zweite Verschlusselement nach vorne und nach hinten nicht über den umlaufenden Rahmen hinausragt. In dieser Weise lässt sich vermeiden, dass der Rahmen im Bereich des Verschlusselements eine Verdickung aufweist. Eine solche würde das Greifen der Brillenfassung stören. In diesem Zusammenhang beschreibt vorne die Richtung, in die der Blick eines Trägers geht. Hinten ist die gegenüberliegende Richtung, welche in der Regel mit der Richtung der abgehenden Bügel übereinstimmt. Es ist zweckmäßig, wenn alle Teile der Verschlusselemente in dem Quader liegt, der wie oben beschrieben ein Brillenglas umschließt. Es kann auch zweckmäßig sein, dass das Verschlusselement nach vorne und hinten dicker ist als der Rahmen selbst, jedoch sollten dabei 100 % oder 200 % der Rahmendicke nicht überschritten werden.

Es hat sich als zweckmäßig erwiesen, das erste Verschlusselement und das zweite Verschlusselement aus Metall zu fertigen. Dann ist es möglich, die Brillenfassung insgesamt, aber auch die Verschlusselemente auszustanzen. Es ist auch gut möglich, die Verschlusselemente oder zumindest ein Verschlusselement aus Metall zu fertigen, übrige Teile der Brillenfassung aber aus einem anderen Material zu fertigen. Insbesondere kann es zweckmäßig sein, nur den Haken aus Metall zu fertigen. Besonders vorteilhaft ist es und bei einer ganz aus Metall gefertigten Brille gut erreichbar, wenn die Verschlusselemente einstückig mit dem Rahmen ausgeführt sind.

Es hat sich als besonders zweckmäßig erwiesen, wenn die Brillenfassung seitliche Backen aufweist, welche durch Backenstege verlängert sind. Diese Backenstege sollen die Verbindung mit den Brillenbügeln herstellen. Es kann zweckmäßig sein, wenn zwischen den Backen und den Backenstegen eine Biegemöglichkeit hergestellt wird, beispielsweise durch Ausnehmungen oder Einbuchtungen. Dies erleichtert durch Verbiegen der Backenstege relativ zur übrigen Brillenfassung, die gewünschte Ausrichtung der Brillenbügel (beispielsweise zur Inklination) herzustellen.

Typischerweise sind an den Seiten der vorderen Brillenfassung Backen ausgebildet, die die Scharniere aufnehmen. Wenn eine solche Brillenfassung mit erfindungsgemäßen Verschlusselementen kombiniert wird, liegt viel Spannung auf den Backen. Ferner sind dann geometrisch relativ große Backen auszubilden, da die Backe sowohl ein Verschlusselement als auch Platz für ein Brillenscharnier anbieten muss. Es ist sowohl geometrisch als auch mechanisch vorteilhaft, wenn der Bügel nicht unmittelbar an die Backe angesetzt wird, sondern wenn ein Backensteg an die Backe angesetzt wird. Das Verschlusselement, beispielsweise eine Öse, kann dann in der Backe platziert werden. Der Bügel selbst wird dazu beabstandet angesetzt, nämlich ggf. am Ende des Backensteges.

Es ist ebenfalls zweckmäßig, wenn benachbart zumindest einem Verschlusselement, vorzugsweise aber benachbart zu beiden Verschlusselementen, Verbindungsmittel vorgesehen sind. Insbesondere sind also zwei Verbindungsmittel zweckmäßig. Bei den Verbindungsmitteln kann es sich um ein Loch oder auch Sackloch im Rahmen handeln.

Solche Verbindungsmittel können von Ansetzen von Werkzeug genutzt werden. Dabei kann ein Werkzeug oder mehr als ein Werkzeug zum Einsatz kommen. Ein zweckmäßiges Werkzeug verfügt über einen Zapfen oder einen Dorn, welche in das Loch, Sackloch oder eine Vertiefung eingeführt werden können. Ein geeignetes Werkzeug ist eine Sprengringzange, die an beiden Backen je einen Dorn aufweist. Die Enden des umlaufenden Rahmens können mithilfe einer solchen Zange genau geführt werden.

Der geöffnete umlaufende Rahmen, d.h. der Rahmen, dessen Verschlusselemente sich in der Offenstellung befinden, weist zwei gegenüberliegende Enden auf. Die Führung mit der Zange kann dazu dienen, die Enden des Rahmens zu führen und dabei Verschlusselemente entweder in die Offenstellung oder auch in die Schließstellung zu überführen. Es ist zweckmäßig, wenn die Verbindungsmittel nicht mehr als 2, 3 oder 5 mm von den aufeinander zuweisenden Enden der Verbindungsmittel entfernt sind.

Im Rahmen der vorliegenden Erfindung geht es auch um ein Verfahren zum Einsetzen eines Brillenglases, welches folgende Schritte umfasst:
- Bereitstellen einer Brillenfassung (10), welche einen umlaufenden Rahmen (12, 14) aufweist, der sich von einer Offenstellung in eine Schließstellung überführen lässt und in der Offenstellen ein erstes Ende (24) und ein zweites Ende (26) ausbildet, wobei der umlaufenden Rahmen (12, 14) in der Offenstellung bereitgestellt wird und ein erstes Verschlusselement (30) und ein zweites Verschlusselement (32) sowie ein erstes Verbindungselement (34) und ein zweites Verbindungselement (36) umfasst
- Einsetzen eines ersten Dorns in das erste Verbindungselement (34) und eines zweiten Dorns in das zweite Verbindungselement (36)
- Zusammenführen des ersten Endes (24) und des zweiten Endes (26) mit dem ersten Dorn und dem zweiten Dorn
- Verbinden des ersten Verschlusselementes (30) und des zweiten Verschlusselementes (32) mithilfe des ersten Dorns und des zweiten Dorns

Das Verfahren ist auf die erfindungsgemäße Brillenfassung bezogen zu verstehen. Das heißt, Merkmale der Gestaltung des Produktes sind analog auf das Verfahren zu übertragen, und Merkmale des Verfahrens sind analog auf Merkmale des Produktes zu übertragen. Die Verfahrensschritte werden vorzugsweise in der Reihenfolge der Aufzählung ausgeführt.

Zweckmäßig ist insbesondere ein Verfahren, bei dem zwei Brillengläser, also ein erstes Brillenglas und ein zweites Brillenglas, in eine Brillenfassung eingesetzt werden.

Ebenfalls zweckmäßig ist, wenn das erste Verschlusselement als Haken und das zweite Verschlusselement als Öse ausgeführt ist. Dabei ist auch zweckmäßig, wenn in einem letzten Schritt der Haken nach dem Verbinden mit dem zweiten Verschlusselement gebogen wird. Insbesondere kommt ein Biegen nach Außen (weg vom Nasensteg) oder nach hinten (in Richtung auf die Brillenbügel zu) in Betracht. Alternativ wird die Brille mit passend vorgebogenem Haken ausgeliefert. Beim Einsetzen von Gläsern durch einen Optiker kann dann der Haken besonders leicht in die Öse eingeführt werden. Wenn die Fassung nach der Herstellung einen Haken aufweist, der im Wesentlichen in der Ebene der einzusetzenden Gläser liegt, wird der Haken am Ende des Herstellungsprozesses (aber in der Regel vor Auslieferung an einen Optiker) nach hinten gebogen (so dass die Hakenspitze in die Richtung der Bügel zeigt).

Weitere Merkmale, aber auch Vorteile der Erfindung, ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten. Die Abbildungen sind teilweise leicht vereinfacht und schematisch.
- Fig. 1: zeigt eine Brillenfassung in der Aufsicht
- Fig. 2: zeigt einen vergrößerten Ausschnitt aus Fig. 1
- Fig. 3: zeigt eine erfindungsgemäße Brille von vorne
- Fig. 4: zeigt die Ansicht der Fig. 3 mit zusätzlichen Maßangaben
- Fig. 5: zeigt eine erfindungsgemäße Brille von der Seite

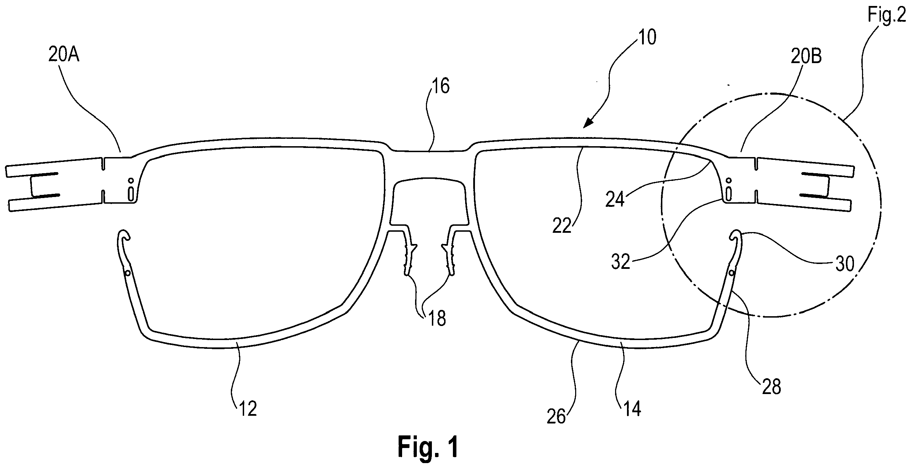

Fig. 1 zeigt eine Brillenfassung 10, welche einen ersten umlaufenden Rahmen 12 und einen zweiten umlaufenden Rahmen 14 aufweist. Beide umlaufende Rahmen können Brillengläser aufnehmen, die Brillenfassung 10 ist aber ohne eingesetzte Brillengläser gezeigt. Die umlaufenden Rahmen 12 und 14 werden durch einen Nasensteg 16 verbunden. Die Brillenfassung 10 ist symmetrisch zur Mittellinie des Nasenstegs 16. Unterhalb des Nasenstegs 16 sind Halter für Nasenplättchen 18 vorgesehen.

Die Brillenfassung weist an beiden Seiten jeweils eine Backe 20 als Ansatzpunkt für Brillenbügel auf. Die Backen sind hier durch Backenstege verlängert, welche mit Bügeln verbunden werden können. Andere Brillenfassungen weisen Backen auf, die die Bügelscharniere tragen können.

Die umlaufenden Rahmen weisen jeweils einen oberen Rahmenbereich 22 und einen unteren Rahmenbereich 26 auf (der Übersichtlichkeit halber sind diese Bereiche nur für den zweiten umlaufenden Rahmen 14 mit Bezugszeichen gekennzeichnet, wegen der Symmetrie der Brillenfassung 10 sind die entsprechenden Bereiche am ersten umlaufenden Rahmen 12 ganz analog ausgebildet).

Der Rahmen befindet sich in seiner Offenstellung, unterhalb der Ansatzplatte für den Brillenbügel befindet sich daher eine Öffnung. Dementsprechend bildet der obere Rahmenbereich 22 ein oberes Rahmenende 24 aus und der untere Rahmenbereich 26 bildet ein unteres Rahmenende 28 aus. Das obere Rahmenende 24 liegt oberhalb einer gedachten horizontalen Linie, die mitten durch den offenen Bereich des zweiten umlaufenden Rahmens 14 führt und das untere Rahmenende 28 liegt unterhalb dieser Linie.

Am unteren Rahmenende 28 ist ein erstes Verschlusselement 30 ausgebildet. Dieses hat im Wesentlichen die Form eines Hakens. Am oberen Rahmenende 24 ist ein zweites Verschlusselement 32 ausgebildet. Dieses hat die Form einer Öse, genauer einer länglichen Öse, welche den Haken des ersten Verschlusselementes 30 aufnehmen kann.

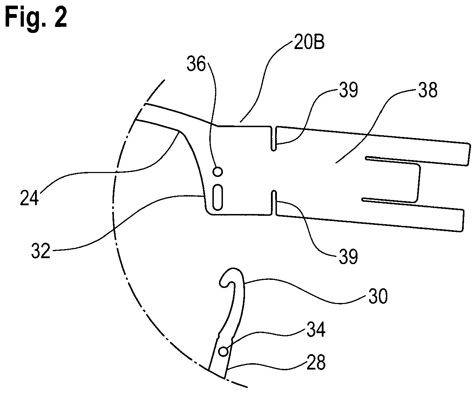

Fig. 2 zeigt die Brillenfassung 10 aus Fig. 1 in vergrößerter Darstellung. Gut erkennbar ist hierbei die Gestaltung des oberen Rahmenendes 24 und des unteren Rahmenendes 28. Der umlaufende Rahmen 14 kann von der dargestellten Offenstellung in seine Schließstellung überführt werden, indem der Haken 30 in die Öse 32 eingeführt wird. Die Öse 32 ist als Langloch ausgeführt, um das Einführen des Hakens zu erleichtern.

In dieser vergrößerten Darstellung sind auch Verbindungselemente erkennbar. Unterhalb des Hakens 30 ist als erstes Verbindungselement ein Loch 34 vorgesehen. Oberhalb der Öse 32 ist als zweites Verbindungselement ein Loch 36 vorgesehen. Diese Verbindungselemente können sowohl als Löcher wie auch als Sacklöcher ausgeführt werden. Diese Elemente sind gut geeignet, ein Werkzeug aufzunehmen, mit welchem sich die korrespondierenden Enden gut führen lassen. Ein zweckmäßiges Werkzeug ist eine Sprengringzange (auch Sicherungsringzange genannt), deren Backen am Ende zwei Dorne aufweisen. Diese Dorne können in die entsprechenden Löcher 34 und 36 eingeführt werden. Das erlaubt ein präzises Führen der Rahmenenden 24 und 28. Die Führung der Rahmenenden ist gerade bei eingesetztem Glas nicht leicht, sodass die Verbindungselemente eine erhebliche Hilfe darstellen.

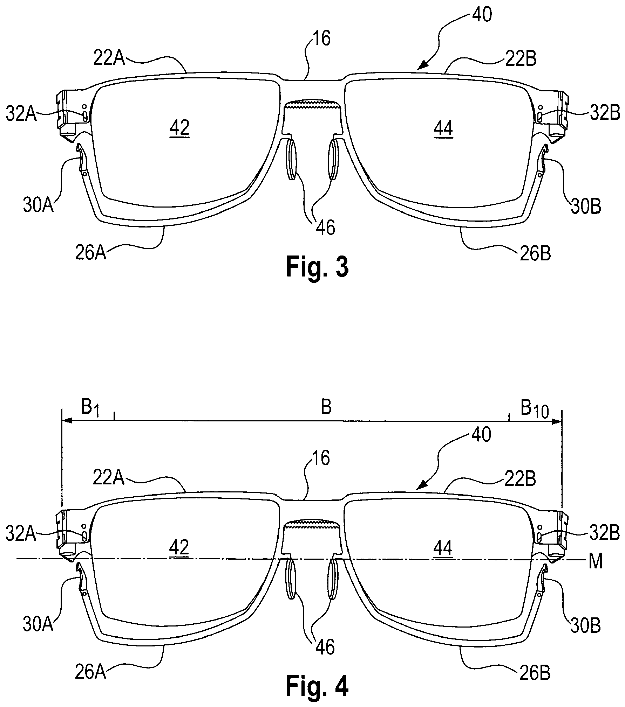

Fig. 3 zeigt eine Brille 40. Diese weist ein erstes Glas 42 und ein zweites Glas 44 auf. Die Brille ist wiederum vollständig symmetrisch zur Mittellinie durch den Nasensteg 16. Unterhalb des Nasensteges sind zwei Nasenplättchen 46 vorgesehen. Die Brille ist im geöffneten Zustand dargestellt. Sie lässt sich in dieser Position leicht in die Schließstellung überführen. Zu diesem Zweck ist auf der linken Seite der Haken 30A in die Öse 32A einzuführen. Auf der rechten Seite ist entsprechend zur Fixierung des zweiten Glases 44 der Haken 30B in die Öse 32B einzuführen. Durch die Verbindung dieser Verbindungselemente werden die beiden umlaufenden Rahmen in die Schließstellung überführt, sodass die unteren Rahmenbereiche 26A und 26B bündig an den Gläsern sitzen und diese stützen. In der Abbildung werden die Haken 30A und 30B nach vorne orientiert gezeigt. Häufig werden die Haken auch nach hinten (auf die Bügel hin) orientiert verwendet.

Fig. 4 zeigt diese Brille mit weiteren Maßangaben. Die Breite des Brillengestells (gemessen von den Außenkanten der Backen in der Nutzungsposition) ist mit B markiert. Diese Breite lässt sich in zehn Abschnitte gleicher Breite unterteilen. Beispielsweise markiert der Abschnitt B₁ die ersten 10 % der Breite der Brille und liegt auf der linken Brillenseite. Entsprechend markiert der Abschnitt B₁₀ die letzten 10 % der Breite der Brille und liegt auf der rechten Seite der Brille. Allgemein ist es im Rahmen dieser Erfindung von Vorteil, wenn die Verschlusselemente in den äußersten Abschnitten liegen, also den ersten 10 % und den letzten 10 % der Breite der Brille oder - wie eingezeichnet - den Abschnitten B₁ und B₁₀. Dementsprechend liegt das erste Verschlusselement 30A und das korrespondierende zweite Verschlusselement 32A für die linke Brillenseite im Bereich B_{1.} Das erste Verschlusselement 30B auf der rechten Seite und das korrespondierende zweite Verschlusselement 32B liegt im Abschnitt B₁₀.

Es ist ebenfalls zweckmäßig, wenn zumindest die zweiten oder weiblichen Verschlusselemente oberhalb der Mittelachse der Brille liegen. In der Regel und zweckmäßigerweise werden dann auch in der Schließstellung die ersten Verschlusselemente oberhalb der Mittellinie liegen. Die horizontale Mittellinie findet man als Verbindungslinie der geometrischen Scheibenmittelpunkte. Die geometrischen Scheibenmittelpunkte lassen sich gemäß DIN EN ISO 8624 und DIN 58208 bestimmen. Sollte eine Brillenfassung so gestaltet sein, dass die Form der Gläser nicht eindeutig festgelegt ist und/oder sich die geometrischen Scheibenmittelpunkte nicht bestimmen lassen, kann man eine relevante Mittellinie auch durch Verbindung der Mittelpunkte der Nasenauflagen bestimmen.

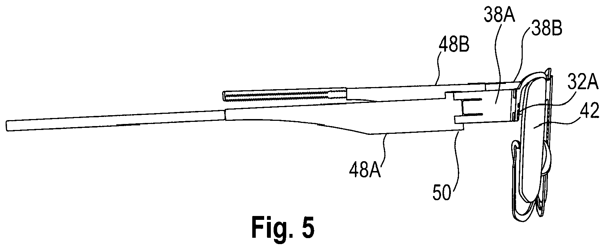

Fig. 5 zeigt die Brille aus Fig. 3 in einer seitlichen Ansicht. Hier werden die Brillenbügel 48A und 48B erkennbar. Die Brillenbügel sind mit den nach hinten gebogenen Backenstegen 38 verbunden. Die Verbindung geschieht über ein Scharnier 50. Man erkennt deutlich, dass dieses Scharnier geometrisch entfernt vom zweiten Verbindungsmittel 32 liegt. Daher wird die Belastung im Backenbereich nicht zu groß.

Insgesamt erkennt man, wie sich in einfacher Weise eine verbesserte Brillenfassung mit neuartigem Verschluss herstellen lässt. Die entsprechende Brillenfassung kann in wenigen Schritten preiswert gefertigt werden und hält Brillengläser sehr sicher.

### Bezugszeichenliste

- 10: Brillenfassung
- 12: erster umlaufender Rahmen
- 14: zweiter umlaufender Rahmen
- 16: Nasensteg
- 18: Halter für Nasenplättchen
- 20: Backe
- 22: oberer Rahmenbereich
- 24: oberes Rahmenende
- 26: unterer Rahmenbereich
- 28: unteres Rahmenende
- 30: erstes Verschlusselement
- 32: zweites Verschlusselement
- 34: erstes Verbindungselement
- 36: zweites Verbindungselement
- 38: Backenstege
- 39: Einbuchtungen
- 40: Brille
- 42: erstes Glas
- 44: zweites Glas
- 46: Nasenplättchen
- 48: Bügel
- 50: Scharnier
- B: Breite
- Bx: Breitenabschnitt
- M: Mittellinie

## Patentansprüche

1. Brillenfassung (10) für mindestens ein Brillenglas, welche das Brillenglas mit einem umlaufenden Rahmen (12, 14) umschließen kann, wobei der umlaufende Rahmen (12, 14) zum Einsetzen des Glases geöffnet werden kann, wobei der umlaufende Rahmen einen Verschluss aufweist, der aus einem ersten Verschlusselement (30) und einem zweiten Verschlusselement (32) gebildet wird, wobei das erste Verschlusselement und das zweite Verschlusselement von einer Offenstellung in eine Schließstellung überführt werden können und in der Schließstellung so zusammenwirken, dass eine Zugkraft im umlaufenden Rahmen (10, 14) wirkt.

2. Brillenfassung (10) nach dem vorhergehenden Anspruch, wobei das erste Verschlusselement (30) als männliches Element gestaltet ist und das zweite Verschlusselement (32) als weibliches Element gestaltet ist.

3. Brillenfassung (10) nach dem vorhergehenden Anspruch, wobei das erste Verschlusselement (30) als Haken ausgeführt ist und das zweite Verschlusselement (32) als Öse ausgeführt ist.

4. Brillenfassung (10) nach einem der vorhergehenden Ansprüche, wobei das erste Verschlusselement (30) und das zweite Verschlusselement (32) nach vorne und nach hintern nicht um mehr als zwei Rahmendicken über den umlaufenden Rahmen hinausragen.

5. Brillenfassung (10) nach einem der vorhergehenden Ansprüche, wobei das erste Verschlusselement (30) und das zweite Verschlusselement (32) aus Metall gefertigt sind.

6. Brillenfassung (10) nach einem der vorhergehenden Ansprüche, die aus Metall gefertigt ist.

7. Brillenfassung (10) nach dem vorhergehenden Anspruch, wobei die Verschlusselemente (30, 32) einstückig mit dem Rahmen ausgeführt sind.

8. Brillenfassung (10) nach einem der vorhergehenden Ansprüche, wobei die Brillenbügel mit Backenstegen (38) verbunden sind, welche an den seitlichen Backen ansetzen.

9. Brillenfassung (10) nach einem der vorhergehenden Ansprüche, wobei mindestens ein Verbindungsmittel (34, 36) zum Führen eines Endes des geöffneten umlaufenden Rahmens mit einem Werkzeug vorgesehen ist.

10. Brillenfassung (10) nach dem vorhergehenden Anspruch, wobei zwei Verbindungsmittel (34, 36) zum Führen eines Endes des geöffneten umlaufenden Rahmens mit einem Werkzeug vorgesehen sind.

11. Brillenfassung (10) nach dem vorhergehenden Anspruch, wobei benachbart zum ersten Verschlusselement (30) und benachbart zum zweiten Verschlusselement (32) jeweils ein Loch vorgesehen ist.

12. Verfahren zum Einsetzen eines Brillenglases, welches folgende Schritte umfasst:
- Bereitstellen einer Brillenfassung (10), welche einen umlaufenden Rahmen (12, 14) aufweist, der sich von einer Offenstellung in eine Schließstellung überführen lässt und in der Offenstellen ein erstes Ende (24) und ein zweites Ende (26) ausbildet, wobei der umlaufenden Rahmen (12, 14) in der Offenstellung bereitgestellt wird und ein erstes Verschlusselement (30) und ein zweites Verschlusselement (32) sowie ein erstes Verbindungselement (34) und ein zweites Verbindungselement (36) umfasst
- Einsetzen eines ersten Dorns in das erste Verbindungselement (34) und eines zweiten Dorns in das zweite Verbindungselement (36)
- Zusammenführen des ersten Endes (24) und es zweiten Endes (26) mit dem ersten Dorn und dem zweiten Dorn
- Verbinden des ersten Verschlusselementes (30) und des zweiten Verschlusselementes (32) mithilfe des ersten Dorns und des zweiten Dorns

13. Verfahren nach dem vorhergehenden Anspruch, wobei der erste Dorn und der zweite Dorn Teil eines Werkzeugs sind.

14. Verfahren nach dem vorhergehenden Anspruch, wobei ein erstes Brillenglas und ein zweites Brillenglas in eine Brillenfassung (10) eingesetzt werden.

15. Verfahren nach dem vorhergehenden Anspruch, bei dem das erste Verschlusselement (30) in Form eines Hakens ausgeführt ist und der Haken vor dem Verbinden mit dem zweiten Verschlusselement (32) zurückgebogen ist.
